# EUROPEAN PATENT APPLICATION

(11) **EP 4 787 654 A1**
(43) Date of publication of application: **05.08.2026**
(21) Application number: 24871703.5
(22) Date of filing: 29.08.2024
(51) Int. Cl.: H02J 3/38, H02J 3/00, H02J 3/46, H02J 7/35, H02J 13/00

(54) **CONTROL METHOD, CONTROL DEVICE, AND POWER SYSTEM**

(30) Priority: 29.09.2023 JP 2023169305
(71) Applicant: Panasonic Intellectual Property Management Co., Ltd., Kadoma-shi, Osaka 571-0057 (JP)
(72) Inventor: OKADA, Takashi, Kadoma-shi, Osaka 571-0057 (JP); IGUCHI, Yusuke, Taito-ku, Tokyo 110-0005 (JP); FUKUOKA, Masaru, Kadoma-shi, Osaka 571-0057 (JP); SHIMIZU, Atsushi, Kadoma-shi, Osaka 571-0057 (JP); IMOTO, Junichi, Kadoma-shi, Osaka 571-0057 (JP)
(74) Representative: Grünecker Patent- und Rechtsanwälte PartG mbB
(86) International application number: PCT/JP2024/030921
(87) International publication number: WO 2025/069902

(57) **Abstract**

A control method in the present disclosure includes performing a first planning method for planning an output of a fuel cell apparatus in such a way as to compensate for a difference between a predicted value of a power demand of a power consumer and a predicted value of an output of a solar power generation apparatus. A control apparatus in the present disclosure includes a storage storing a predicted value of a power demand of a power consumer and a predicted value of an output of a solar power generation apparatus and a planner that performs a planning method for planning an output of a fuel cell apparatus in such a way as to compensate for a difference between the predicted value of the power demand of the power consumer and the predicted value of the output of the solar power generation apparatus.

## Description

### Technical Field

The present disclosure relates to a control method, a control apparatus, and a power system.

### Background Art

PTL 1 describes a household distributed power supply apparatus including a solar cell, a fuel cell, and a power storage device. In the household distributed power supply apparatus described in PTL 1, a control signal for an output necessary for the fuel cell is calculated as a difference between a load current and an output current of the solar cell. The power storage device supplies an insufficient portion of power caused by a delay in increase of an output of the fuel cell.

### Citation List

### Patent Literature

PTL 1: Japanese Unexamined Patent Application Publication No. 2004-208436

### Summary of Invention

### Technical Problem

In the example of the related art, the output of the fuel cell easily varies, which deteriorates the fuel cell.

### Solution to Problem

The present disclosure provides a control method including performing a first planning method for planning an output of a fuel cell apparatus in such a way as to compensate for a difference between a predicted value of a power demand of a power consumer and a predicted value of an output of a solar power generation apparatus. Advantageous Effects of Invention

According to the present disclosure, deterioration of a fuel cell apparatus can be suppressed.

### Brief Description of Drawings

[Fig. 1] Fig. 1 is a configuration diagram of a power system according to an embodiment of the present disclosure.
[Fig. 2] Fig. 2 is a functional block diagram of a control apparatus and a database illustrated in Fig. 1.
[Fig. 3] Fig. 3 is a flowchart illustrating a process for switching between a first planning method and a second planning method.
[Fig. 4A] Fig. 4A includes graphs indicating variations in various types of power and a state of charge in the power system according to the present embodiment at a time when the first planning method is performed.
[Fig. 4B] Fig. 4B includes graphs indicating variations in the various types of power and the state of charge in the power system according to the present embodiment at a time when the second planning method is performed.

### Description of Embodiments

An embodiment of the present disclosure will be described hereinafter with reference to the drawings. The present disclosure is not limited to the following embodiment.

### (Embodiment)

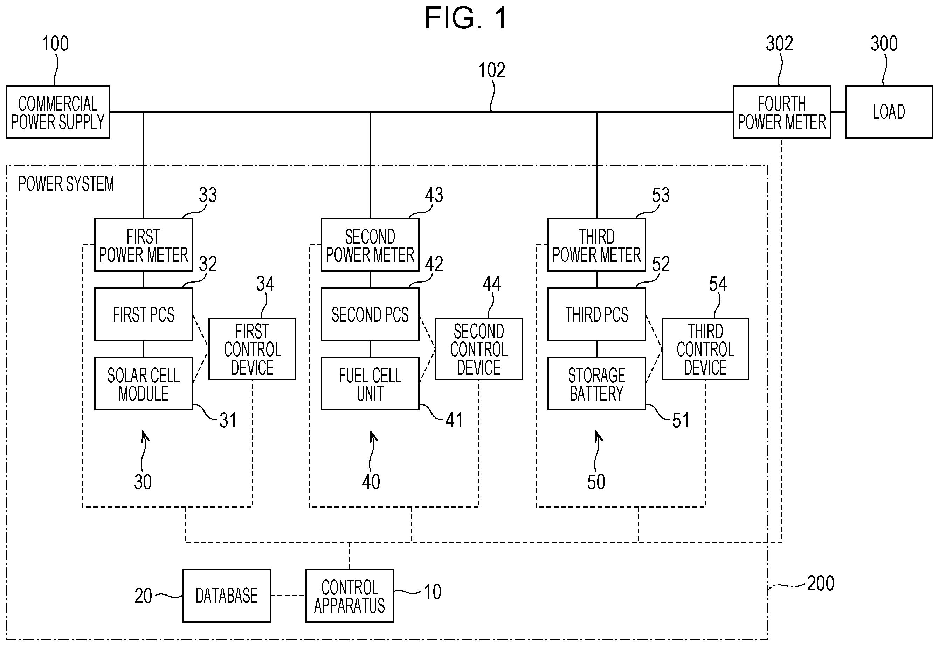

Fig. 1 is a configuration diagram of a power system according to the embodiment of the present disclosure. A power system 200 includes a control apparatus 10, a database 20, a solar power generation apparatus 30, a fuel cell apparatus 40, and a power storage apparatus 50. The solar power generation apparatus 30, the fuel cell apparatus 40, and the power storage apparatus 50 are connected to a load 300 via a power line 102. Power generated by the solar power generation apparatus 30 and the fuel cell apparatus 40 is supplied to the load 300 via the power line 102. The power generated by the solar power generation apparatus 30 and the fuel cell apparatus 40 is stored in the power storage apparatus 50 as necessary, and the power storage apparatus 50 supplies the power to the load 300.

A commercial power supply 100 is connected to the power line 102. The power system 200 may be linked with the commercial power supply 100. The power system 200 may purchase power from the commercial power supply 100 and sell excess power to the commercial power supply 100 (reverse power flow). With the power system 200 according to the present embodiment, however, a power shortage hardly occurs, and excess power is hardly caused.

The solar power generation apparatus 30 includes a solar cell module 31, a first PCS 32 (power conditioning subsystem), a first power meter 33, and a first control device 34. The solar power generation apparatus 30 may include a plurality of solar cell modules 31. The solar cell module 31 can include a plurality of solar cell panels. The first PCS 32 converts power generated by the solar cell module 31 from direct current (DC) power to alternating current (AC) power and outputs the AC power to the power line 102. The first power meter 33 detects the power output from the first PCS 32, that is, the power generated by the solar power generation apparatus 30. The first control device 34 is communicably connected to the control apparatus 10. The first control device 34 controls the solar cell module 31 or the first PCS 32 in accordance with an instruction received from the control apparatus 10. The first control device 34 can be a computer including a storage device storing a program necessary to control the solar power generation apparatus 30 and a processor that reads the program from the storage device and that executes the program.

The fuel cell apparatus 40 includes a fuel cell unit 41, a second PCS 42, a second power meter 43, and a second control device 44. The fuel cell apparatus 40 may include a plurality of fuel cell units 41 capable of operating independently from each other. By adjusting the number of fuel cell units 41 to operate and/or outputs of the fuel cell units 41, power to be generated by the fuel cell apparatus 40 can be changed. The second PCS 42 converts the power generated by the fuel cell unit 41 from DC power to AC power and outputs the AC power to the power line 102. The second power meter 43 detects the power output from the second PCS 42, that is, the power generated by the fuel cell apparatus 40. The second control device 44 is communicably connected to the control apparatus 10. The second control device 44 controls the fuel cell unit 41 or the second PCS 42 in accordance with an instruction received from the control apparatus 10. The second control device 44 can be a computer including a storage device storing a program necessary to control the fuel cell apparatus 40 and a processor that reads the program from the storage device and that executes the program.

A fuel cell in the fuel cell apparatus 40 may be a polymer electrolyte fuel cell, a solid oxide fuel cell, a phosphoric acid fuel cell, a molten carbonate fuel cell, or the like.

The power storage apparatus 50 includes a storage battery 51, a third PCS 52, a third power meter 53, and a third control device 54. The storage battery 51 can be a secondary battery. The power storage apparatus 50 may include a capacitor instead of the storage battery 51. The third PCS 52 is a bidirectional PCS. When power is stored in the storage battery 51, the third PCS 52 converts AC power into DC power. When power is discharged from the storage battery 51, the third PCS 52 converts DC power into AC power. The third power meter 53 detects power output from the third PCS 52 and power input to the third PCS 52. That is, the third power meter 53 detects charging power and discharging power of the power storage apparatus 50. The third control device 54 is communicably connected to the control apparatus 10. The third control device 54 controls the storage battery 51 or the third PCS 52 in accordance with an instruction received from the control apparatus 10. The third control device 54 can be a computer including a storage device storing a program necessary to control the power storage apparatus 50 and a processor that reads the program from the storage device and that executes the program.

The third control device 54 sequentially transmits a state of charge (SOC) of the power storage apparatus 50 to the control apparatus 10. The SOC of the power storage apparatus 50 is stored in the database 20 in time series.

The load 300 represents a power consumer such as a factory. A fourth power meter 302 detects, for example, power consumption of a factory. The fourth power meter 302 may be a part of the power system 200, instead.

The control apparatus 10 gives control instructions to the first control device 34, the second control device 44, and the third control device 54 to control operations of the solar power generation apparatus 30, the fuel cell apparatus 40, and the power storage apparatus 50, respectively. Specifically, the control apparatus 10 transmits, to the first control device 34, the second control device 44, and the third control device 54, information necessary to control these devices. The control apparatus 10 is a computer including a storage device storing a program necessary to control these devices and a processor that reads the program from the storage device and that executes the program. The control apparatus 10 obtains detected values from the first power meter 33, the second power meter 43, the third power meter 53, and the fourth power meter 302 at a predetermined sampling period (for example, at a period of 30 seconds) and transmits the detected values to the database 20. The power generated by the solar power generation apparatus 30, the power generated by the fuel cell apparatus 40, the charging power of the power storage apparatus 50, the discharging power of the power storage apparatus 50, and the power consumption of the load 300 from these detected values.

The database 20 includes a server computer and is communicably connected to the control apparatus 10. The database 20 stores, in time series, data regarding the power generated by the solar power generation apparatus 30, the power generated by the fuel cell apparatus 40, the charging power of the power storage apparatus 50, the discharging power of the power storage apparatus 50, the power consumption of the load 300, the SOC of the power storage apparatus 50, and the like. The amount of power (kWh) can be calculated from the time-series data.

The control apparatus 10 may be a cloud computer or may be an edge computer. The database 20 may be a database in a cloud server or may be a database in an edge server. The cloud computer and the cloud server can be arranged at locations away from locations where the solar power generation apparatus 30, the fuel cell apparatus 40, and the power storage apparatus 50 are provided. The cloud computer as the control apparatus 10 is communicably connected to the first control device 34, the second control device 44, and the third control device 54 via a communication network such as the Internet. The edge computer and the edge server can be arranged at locations near the locations where the solar power generation apparatus 30, the fuel cell apparatus 40, and the power storage apparatus 50 are provided.

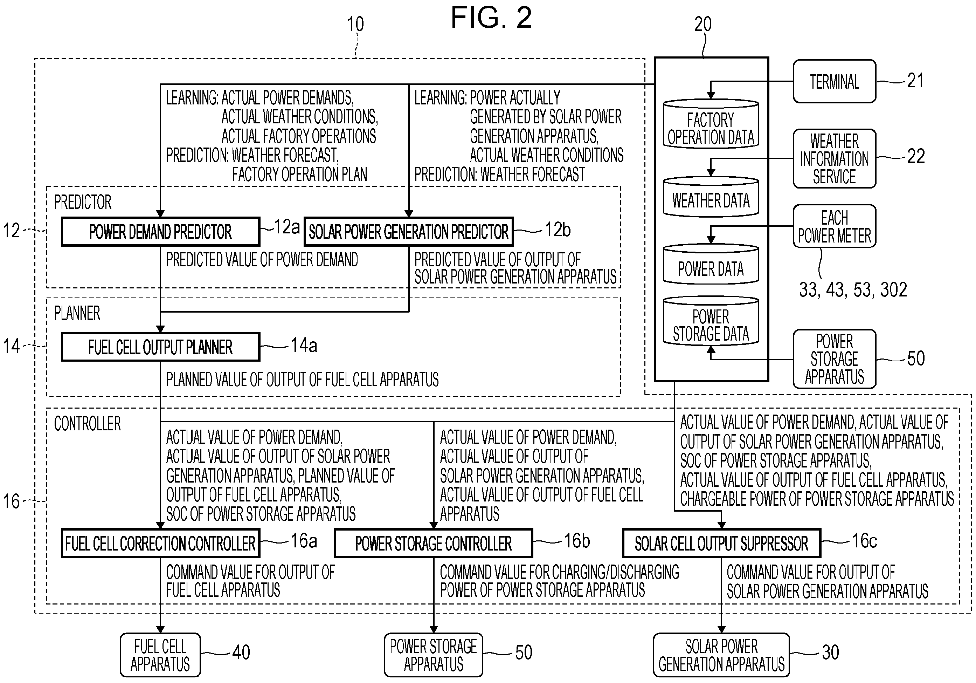

Fig. 2 is a functional block diagram of the control apparatus 10 and the database 20 illustrated in Fig. 1. The database 20 stores factory operation data, weather data, power data, and power storage data. The control apparatus 10 creates prediction models through machine learning using the various types of data stored in the database 20, and then creates an operation instruction to the fuel cell apparatus 40 using the prediction models. The prediction models include a prediction model for predicting a power demand of the factory and a prediction model for predicting power to be generated by the solar power generation apparatus 30.

In the database 20, the factory operation data is data input by a manager from a terminal 21. The factory operation data is a combination of data indicating presence or absence of operation of the factory and date data. The data indicating presence or absence of operation of the factory is data indicating non-operating days and operating days. Whether a specific day in the past was a non-operating day or an operating day can be determined on the basis of the factory operation data. There is a correlation between power consumption of the factory and presence or absence of operation of the factory. The power consumption of the factory is large on operating days, and the power consumption of the factory is small on non-operating days. The factory operation data, therefore, can be used as training data for creating the prediction model for predicting the power demand of the factory.

There is a correlation between power consumption and presence or absence of operation even when the load 300 (Fig. 1) is a facility other than a factory. Facilities other than a factory include a commercial facility, a hospital, a school, and an office building. When the load 300 is a commercial facility such as a department store, for example, the operation data may be a combination of data indicating any of "non-operating day", "operating day and weekday", and "operating day and holiday" and date data. Power consumption of a commercial facility is large on operating days, and the power consumption is small on non-operating days. Even on operating days, there is a difference in power consumption between weekdays and holidays.

In the database 20, the weather data is data input from a weather information service 22 via a communication network such as the Internet. The weather data may be input by the manager from the terminal 21. The weather data is a combination of data indicating a weather condition and date data. The data indicating a weather condition is, for example, a combination of time periods and solar irradiance. The solar irradiance in each of time periods in the past can be determined on the basis of the weather data. The solar irradiance is represented by, for example, a plurality of levels of intensity ranging from an intensity corresponding to clear weather to an intensity corresponding to rainy weather. There is a correlation between the solar irradiance and the power generated by the solar power generation apparatus 30. The generated power (kW) is large when the solar irradiance is high, and the generated power is small when solar irradiance is low. The weather data indicating the solar irradiance, therefore, can be used as training data for creating the prediction model for predicting the power to be generated by the solar power generation apparatus 30. The weather data may include sunshine duration for each time period instead of, or in addition to, the solar irradiance. There is a correlation between the sunshine duration and the amount of power (kWh) generated by the solar power generation apparatus 30.

The data indicating a weather condition can include data regarding a combination of a time period and atmospheric temperature. For example, when the atmospheric temperature is high, power consumption of air conditioners increases, and accordingly the power consumption of the factory increases. When the atmospheric temperature is low, the power consumption of the air conditions also increases, and accordingly the power consumption of the factory increases. The weather data indicating atmospheric temperature, therefore, can be used as training data for creating the prediction model for predicting the power demand of the factory.

The data indicating a weather condition is not limited to that described above. The data indicating a weather condition may include another piece of data correlated with the power generated by the solar power generation apparatus 30 or another piece of data correlated with the power demand.

In the database 20, the power data is data input from the power meters 33, 43, 53, and 302 via the control apparatus 10. The power data can be time-series data regarding the power generated by the solar power generation apparatus 30, the power generated by the fuel cell apparatus 40, the charging power of the power storage apparatus 50, the discharging power of the power storage apparatus 50, and the power consumption of the load 300. With the power data, the power generated by the solar power generation apparatus 30, the power generated by the fuel cell apparatus 40, the charging power of the power storage apparatus 50, the discharging power of the power storage apparatus 50, and the power consumption of the load 300 in a specific period in the past can be identified. The power data indicating the power consumption of the load 300 can be used as training data for creating the prediction model for predicting the power demand of the factory. The data regarding the power generated by the solar power generation apparatus 30 can be used as training data for creating the prediction model for predicting the power to be generated by the solar power generation apparatus 30.

In the database 20, the power storage data is data input from the power storage apparatus 50 via the control apparatus 10. The power storage data is data indicating the SOC of the power storage apparatus 50.

The control apparatus 10 includes a predictor 12, a planner 14, and a controller 16.

The predictor 12 includes a power demand predictor 12a and a solar power generation predictor 12b. The power demand predictor 12a predicts a predicted value of the power demand on the basis of a correlation between an actual weather condition and an actual value of the power demand and a weather forecast. In addition, the power demand predictor 12a predicts the predicted value of the power demand on the basis of a correlation between an actual operation in the factory and an actual weather condition and the actual value of the power demand of the factory, a weather forecast, and a factory operation plan. The solar power generation predictor 12b predicts a predicted value of the output of the solar power generation apparatus 30 on the basis of a correlation between an actual weather condition and an actual value of the output of the solar power generation apparatus 30 and a weather forecast.

The power demand predictor 12a can be a program module including the prediction model for predicting the power demand of the load 300. The prediction model in the power demand predictor 12a is created using actual power demands, actual weather conditions, and actual operations in the factory. As the actual power demands, the power data indicating the power consumption of the load 300 is used. As the actual weather conditions, the weather data is used. The actual weather conditions are actual weather conditions in an area where the power consumer such as the factory is located. As the actual operations in the factory, the factory operation data is used. The prediction model is, for example, a regression model. The power data, the weather data, and the factory operation data are labeled data in machine learning.

By inputting a weather forecast and a factory operation plan to the prediction model in the power demand predictor 12a, a predicted value of the power demand (power consumption) of the factory can be obtained. That is, a predicted value of the power demand of the factory, which is a dependent variable, is obtained using the weather forecast and the factory operation plan as explanatory variables. As the weather forecast, for example, data regarding atmospheric temperature at a time point or in a time period for which a predicted value of the power demand is to be obtained is used. The weather forecast may include data indicating solar irradiance or sunshine duration. The weather forecast is a weather forecast in the area where the power consumer such as the factory is located. As the factory operation plan, data indicating presence or absence of operation of the factory at a time for which a predicted value of the power demand is to be obtained is used.

The solar power generation predictor 12b can be a program module including the prediction model for predicting the power to be generated by the solar power generation apparatus 30. The prediction model in the solar power generation predictor 12b is created using the actual amount of power generated by the solar power generation apparatus 30 and actual weather conditions. As the actual amount of power generated by the solar power generation apparatus 30, the power data indicating the power generated by the solar power generation apparatus 30 is used. As the actual weather conditions, the weather data is used. The prediction model is, for example, a regression model. The power data and the weather data are labeled data in machine learning.

By inputting a weather forecast to the prediction model in the solar power generation predictor 12b, a predicted value of the output of (power to be generated by) the solar power generation apparatus 30 can be obtained. That is, the predicted value of the output of the solar power generation apparatus 30, which is a dependent variable, is obtained by using the weather forecast as an explanatory variable. As the weather forecast, for example, data indicating the solar irradiance or the sunshine duration at a time point or in a time period for which the predicted value of the output of the solar power generation apparatus 30 is to be obtained.

In order to create the above-described prediction models of the predictor 12, various types of data in a predetermined period (for example, three months to one year) are used. The prediction models may be updated daily. As a result, prediction accuracy is expected to improve. The prediction models may be stored in the database 20.

Processing performed by the predictor 12 to obtain predicted values is performed at a predetermined period. For example, a plurality of predicted values from a current time to 24 hours later is obtained once per hour. The plurality of predicted values is, for example, 24 predicted values at an interval of one hour.

Processing for correcting a predicted value may be performed. For example, a predicted value of the power demand is corrected using the following method. That is, a predicted value obtained from the prediction model may be corrected on the basis of an actual value of the power demand in the latest first period and a predicted value of the power demand for a second period corresponding to the first period. The latest first period is a period from the current time to a predetermined period of time (30 minutes to one hour) ago. For example, when the current time is 10:00, the latest first period is a period from 9:00 to 10:00. Actual values of the power demand in this period are stored in the database 20 in time series as the power consumption of the load 300. The actual values of the power demand in the first period can be an average in the first period. Next, the second period corresponding to the first period is a period corresponding to the first period in a period of 24 hours for which the 24 predicted values have been obtained. For example, when the first period is a period of 9:00 to 10:00, the corresponding second period is a period of 9:00 to 10:00.

It is assumed, for example, that an actual value of the power demand in the period of 9:00 to 10:00, which is the first period, is 100 kW. It is also assumed that a predicted value of the power demand in the time period of 9:00 to 10:00, which is the second period, is 90 kW. In this case, the actual value exceeds the predicted value by 10 kW. A predicted value of the power demand for 10:00 to 11:00, therefore, is corrected by adding 10 kW. The prediction accuracy can thus be improved. A difference between an actual value and a predicted value may be used for the correction as is, or a predetermined percentage (for example, 80%) of the difference between the actual value and the predicted value may be used for the correction. Any degree of correction may be performed. Among the 24 predicted values in the future, only a predicted value to be used next may be corrected, or a plurality of predicted values including the predicted value to be used next may be corrected.

A predicted value of the power to be generated by the solar power generation apparatus 30 may be corrected by the same method. That is, that is, a predicted value obtained from the prediction model may be corrected on the basis of an actual value of the output of the solar power generation apparatus 30 in a latest third period and a predicted value of the output of the solar power generation apparatus 30 in a fourth period corresponding to the third period. The prediction accuracy can thus be improved. The third period may be the same period as the first period, or may be a different period. The fourth period may be the same period as the second period, or may be a different period.

Predicted values obtained by the predictor 12 are stored in the database 20. With this configuration, prediction processing for obtaining predicted values and planning processing for obtaining a planned value can be performed asynchronously. A server that serves as the database 20 is an example of a storage storing predicted values of the power demand and predicted values of the output of the solar power generation apparatus 30.

The planner 14 includes a fuel cell output planner 14a. The fuel cell output planner 14a can be a program module for obtaining a planned value of the output of (power to be generated by) the fuel cell apparatus 40. The fuel cell output planner 14a obtains a predicted value Pd of the power demand and a predicted value Ppv of the output of the solar power generation apparatus 30 from the predictor 12, and calculates the planned value of the output of the fuel cell apparatus 40 using these predicted values. For example, when the current time is 8:50, for example, the predictor 12 creates a predicted value of the power demand and a predicted value of the output of the solar power generation apparatus 30 for the period of 9:00 to 10:00, and the planned value of the output of the fuel cell apparatus 40 is calculated from these predicted values. The predicted values and the planned value may be represented as instantaneous power (kW), or may be represented as the amount of power per unit time (kWh).

In the present embodiment, the planner 14 plans the output of the fuel cell apparatus 40 in such a way as to compensate for a difference between the predicted value Pd of the power demand and the predicted value Ppv of the output of the solar power generation apparatus 30. By planning the output of the fuel cell apparatus 40 using the predicted values, variation in the output of the fuel cell apparatus 40 can be suppressed compared to when the output of the fuel cell apparatus 40 is planned on the basis of only latest actual values. Because there is a correlation between lifetime of a stack of the fuel cell apparatus 40 and a frequency of variation in the output of the fuel cell apparatus 40, life of the fuel cell apparatus 40 can be extended by suppressing the variation in the output of the fuel cell apparatus 40.

A planned value Pfc of the output of the fuel cell apparatus 40 is obtained as, for example, a difference (Pd - Ppv) between the predicted value Pd of the power demand and the predicted value Ppv of the output of the solar power generation apparatus 30. When the current time is 8:50, therefore, the planned value Pfc of the output of the fuel cell apparatus 40 in the period of 9:00 to 10:00 can be (Pd - Ppv). If the difference is smaller than or equal to zero, that is, if (Pd - Ppv) ≤ 0, the planned value Pfc of the output of the fuel cell apparatus 40 is zero.

With the method according to the present embodiment, the predicted value Pd of the power demand and the predicted value Ppv of the output of the solar power generation apparatus 30 are obtained. Even in a case where the output of the fuel cell apparatus 40 would be varied in the method for determining the output of the fuel cell apparatus 40 on the basis of the latest data, therefore, it might be determined in the method according to the present embodiment that the output of the fuel cell apparatus 40 is not to be varied. Such a difference is due to poor output responsiveness of the fuel cell apparatus 40.

The processing for obtaining a planned value by the planner 14 is performed at a predetermined period. For example, a planned value necessary for an operation in a next time period is obtained once per hour.

The planner 14 is an example of a planner that performs a planning method for planning the output of the fuel cell apparatus 40 in such a way as to compensate for the difference between the predicted value Pd of the power demand and the predicted value Ppv of the output of the solar power generation apparatus 30.

In the present specification, "compensate for a difference" refers to both compensation for all the difference and compensation for a part of the difference. Since the difference between the predicted value Pd of the power demand and the predicted value Ppv of the output of the solar power generation apparatus 30 is determined as the planned value Pfc of the output of the fuel cell apparatus 40 in the example described above, the output of the fuel cell apparatus 40 compensates for all the difference.

The controller 16 includes a fuel cell correction controller 16a, a power storage controller 16b, and a solar cell output suppressor 16c.

In the controller 16, the fuel cell correction controller 16a can be a program module for determining whether to correct the planned value Pfc of the output of the fuel cell apparatus 40 and correcting the planned value Pfc as necessary. The fuel cell correction controller 16a obtains the planned value Pfc of the output of the fuel cell apparatus 40 from the planner 14 and also obtains an actual value Rd of the power demand from the database 20, an actual value Rpv of the output of the solar power generation apparatus 30, and the SOC of the power storage apparatus 50. The actual value Rd of the power demand is the power consumption of the load 300. Specifically, an average of the power consumption in a predetermined period can be used as the actual value Rd of the power demand. An average of power generated by the solar power generation apparatus 30 in the predetermined period can be used as the actual value Rpv of the output of the solar power generation apparatus 30. The averages are, for example, moving averages. The predetermined period is, for example, a period from 30 minutes ago to a time (substantially the current time) at which latest data was obtained. The SOC of the power storage apparatus 50 is an SOC of the power storage apparatus 50 at a time (substantially the current time) at which latest data was obtained.

It is desirable for the power system 200 to avoid purchase of power from the commercial power supply 100 and sale of power to the commercial power supply 100 (reverse power flow) as much as possible, and it is also desirable that the power storage apparatus 50 be always chargeable and dischargeable. If the power storage apparatus 50 is in a fully charged state or a fully discharged state, it is difficult for the power storage apparatus 50 to balance supply and demand in the power system 200. In the present embodiment, the fuel cell correction controller 16a corrects the planned value of the output of the fuel cell apparatus 40 in consideration of the SOC of the power storage apparatus 50 in such a way as to inhibit the SOC of the power storage apparatus 50 from reaching the fully charged state or the fully discharged state.

The fuel cell correction controller 16a corrects the planned value Pfc of the output of the fuel cell apparatus 40 on the basis of the SOC of the power storage apparatus 50 predicted from a difference between the actual value Rd of the power demand and the sum of the actual value Rpv of the output of the solar power generation apparatus 30 and the planned value Pfc of the output of the fuel cell apparatus 40. As a result, a command value for the output of the fuel cell apparatus 40 can be created in consideration of the SOC of the power storage apparatus 50, thereby maintaining the power storage apparatus 50 in a chargeable/dischargeable state.

Specifically, a value (Rd - Rpv - Pfc) obtained by subtracting the sum of the actual value Rpv of the output of the solar power generation apparatus 30 and the planned value Pfc of the output of the fuel cell apparatus 40 from the actual value Rd of the power demand is calculated. This value is zero, a negative value, or a positive value.

If the value (Rd - Rpv - Pfc) is a negative value, it is highly probable, on the basis of the latest actual values, excess power is likely to be caused in the future. The SOC a predetermined period of time later (for example, 1 hour later) in a case where the power storage apparatus 50 is charged with a level of power corresponding to an absolute value of the value (Rd - Rpv - Pfc), therefore, is predicted from the latest SOC. The SOC the predetermined period of time later can be obtained from the latest SOC of the power storage apparatus 50, capacity of the power storage apparatus 50, and the charging power of the power storage apparatus 50. If the SOC the predetermined period of time later exceeds a predetermined upper limit value smaller than the fully charged state (100%), the planned value Pfc of the output of the fuel cell apparatus 40 is corrected such that the SOC the predetermined period of time later becomes lower than or equal to the upper limit value. For example, the planned value Pfc of the output of the fuel cell apparatus 40 is corrected by subtracting a correction value from the planned value Pfc of the output of the fuel cell apparatus 40 or multiplying the planned value Pfc by a correction value smaller than 1. As a result, the fuel cell apparatus 40 is operated with a smaller output than the planned value Pfc. The upper limit value of the SOC is set to, for example, 80% of the capacity of the power storage apparatus 50.

If the value (Rd - Rpv - Pfc) is a positive value, it is highly probable, on the basis of the latest actual values, that power shortage will occur. The SOC a predetermined period of time later (for example, 1 hour later) in a case where a level of power corresponding to the value (Rd - Rpv - Pfc) is discharged from the power storage apparatus 50 is predicted from the latest SOC. If the SOC the predetermined period of time later falls below a predetermined lower limit value larger than the fully discharged state (0%), the planned value Pfc of the output of the fuel cell apparatus 40 is corrected such that the SOC the predetermined period of time later becomes higher than or equal to the lower limit value. For example, the planned value Pfc of the output of the fuel cell apparatus 40 is corrected by adding a correction value to the planned value Pfc of the output of the fuel cell apparatus 40 or multiplying the planned value Pfc by a correction value larger than 1. As a result, the fuel cell apparatus 40 is operated with a larger output than the planned value Pfc. The lower limit value of the SOC is set to, for example, 20% of the capacity of the power storage apparatus 50.

If the value (Rd - Rpv - Pfc) is zero, the planned value Pfc is not corrected. If the SOC the predetermined period of time later is higher than or equal to the lower limit value and lower than or equal to the upper limit value, the planned value Pfc is also not corrected.

The fuel cell correction controller 16a creates a command value for the output of the fuel cell apparatus 40 using the planned value Pfc or a corrected planned value Pfc'. The command value is transmitted to the second control device 44 of the fuel cell apparatus 40. The second control device 44 controls operation of the fuel cell unit 41 in such a way as to generate power according to the command value.

The processing for correcting the planned value Pfc of the output of the fuel cell apparatus 40 may be performed in synchronization with the processing for creating the planned value Pfc, or may be performed at a shorter control period than that of the process for creating the planned value Pfc. The planned value Pfc can be corrected as soon as it is found that the SOC of the power storage apparatus 50 will exceed the upper limit value or fall below the lower limit value.

In the controller 16, the power storage controller 16b can be a program module for adjusting the charging/discharging power of the power storage apparatus 50 by controlling the power storage apparatus 50. The power storage controller 16b obtains, from the database 20, the actual value Rd of the power demand, the actual value Rpv of the output of the solar power generation apparatus 30, and an actual value Rfc of the output of the fuel cell apparatus 40. Since the output of the fuel cell apparatus 40 follows the command value, the command value for the output of the fuel cell apparatus 40 may be regarded as the actual value Rfc of the output of the fuel cell apparatus 40.

The power storage controller 16b controls the power storage apparatus 50 in such a way as to compensate for a difference between the actual value Rd of the power demand and the sum of the actual value Rpv of the output of the solar power generation apparatus 30 and the actual value Rfc of the output of the fuel cell apparatus 40 by charging or discharging the power storage apparatus 50. With this configuration, supply and demand can be balanced in the power system 200, and it is possible to avoid purchase of power from the commercial power supply 100 and sale of power to the commercial power supply 100 as much as possible. This is advantageous from the perspective of increasing a utilization rate of renewable energy while avoiding use of power from the commercial power supply 100.

Specifically, a value (Rd - Rpv - Rfc) obtained by subtracting the actual value Rpv of the output of the solar power generation apparatus 30 and the actual value Rfc of the output of the fuel cell apparatus 40 from the actual value Rd of the power demand is calculated. This value is zero, a negative value, or a positive value. If the value (Rd - Rpv - Rfc) is a negative value, excess power has been caused, and a command value for the charging power of the power storage apparatus 50 is created in such a way as to charge the power storage apparatus 50 with the excess power. If the value (Rd - Rpv - Rfc) is a positive value, power shortage has occurred, and a command value for the discharging power of the power storage apparatus 50 is created in such a way as to compensate for the power shortage by discharging the power storage apparatus 50. If the value (Rd - Rpv - Rfc) is zero, a command value for the charging/discharging power of the power storage apparatus 50 is created such that the charging/discharging power becomes zero. The actual value Rd of the power demand is the power consumption of the load 300. The latest power consumption can be used as the actual value Rd of the power demand. As the actual value Rpv of the output of the solar power generation apparatus 30 and the actual value Rfc of the output of the fuel cell apparatus 40, latest outputs can be used. The latest power consumption and the latest outputs are values included in the power data stored in the database 20.

The command value for the charging/discharging power of the power storage apparatus 50 is transmitted from the power storage controller 16b to the third control device 54 of the power storage apparatus 50. The third control device 54 controls the operation of the power storage apparatus 50 in such a way as to charge the power storage apparatus 50 with a level of power according to the command value or discharge a level of power according to the command value. The charging/discharging power of the power storage apparatus 50 is adjusted to a desired value by controlling the third PCS 52.

In the controller 16, the solar cell output suppressor 16c can be a program module for suppressing the output of the solar power generation apparatus 30. When the SOC of the power storage apparatus 50 exceeds a first threshold, the solar cell output suppressor 16c creates a command value for the solar power generation apparatus 30 in such a way as to suppress the output of the solar power generation apparatus 30. When the SOC of the power storage apparatus 50 falls below a second threshold, the suppression of the output of the solar power generation apparatus 30 is canceled. The first threshold of the SOC is, for example, 90% of the capacity of the power storage apparatus 50. The second threshold of the SOC is, for example, 85% of the capacity of the power storage apparatus 50. With this configuration, since it is possible to avoid reaching of the power storage apparatus 50 to the fully charged state, sale of power to the commercial power supply 100 (reverse power flow) can be avoided as much as possible.

Processing for suppressing the output of the solar power generation apparatus 30 is as follows. The solar cell output suppressor 16c sets a value smaller than or equal to a difference between the sum of the actual value Rd of the power demand and chargeable power Sc of the power storage apparatus 50 and the actual value Rfc of the output of the fuel cell apparatus 40 to an upper limit value of the output of the solar power generation apparatus 30. With this configuration, the power generated by the solar power generation apparatus 30 can be used without waste.

Specifically, a value (Rd + Sc - Rfc) obtained by subtracting the actual value Rfc (kW) of the output of the fuel cell apparatus 40 from the sum of the actual value Rd (kW) of the power demand and the chargeable power Sc (kW) of the power storage apparatus 50 is calculated. The value (Rd + Sc - Rfc) or a value smaller than the value is set to the upper limit value of the output of the solar power generation apparatus 30. The actual value Rd of the power demand is, for example, power consumption at any time point in the past, and may be an average of the power demand in a recent time period (for example, last one hour) or may be a minimum value of the power demand in the recent time period. The chargeable power Sc of the power storage apparatus 50 is maximum charging power of the power storage apparatus 50 or any power smaller than the maximum charging power. The maximum charging power of the power storage apparatus 50 is a design value of the power storage apparatus 50 determined in accordance with a type of storage battery 51 and the like. That is, the power storage apparatus 50 is not charged with power exceeding the maximum charging power. The actual value Rfc of the output of the fuel cell apparatus 40 is, for example, a latest value of the output of the fuel cell apparatus 40.

When the output of the solar power generation apparatus 30 is not suppressed, the first PCS 32 performs MPPT (maximum power point tracking) control so that the solar power generation apparatus 30 supplies a maximum output to the power line 102. When an upper limit value of the output of the solar power generation apparatus 30 is set, on the other hand, the first PCS 32 operates the solar power generation apparatus 30 at an operating point deviated from optimum operating points on an I-V curve so that the output of the solar power generation apparatus 30 does not exceed the upper limit value. That is, MPPT control is not performed. In the present embodiment, the first PCS 32 has such a function.

As described above, in the present embodiment, the prediction model for predicting the power demand of the factory and the prediction model for predicting the power to be generated by the solar power generation apparatus 30 are used. In order to create the prediction models, various types of data for a sufficient number of days are necessary. In a period until sufficiently accurate prediction models are created, a planned value of the output of the fuel cell apparatus 40 can be calculated using data regarding the latest power demand and data regarding the latest output of the solar power generation apparatus 30. Specifically, a difference between the latest power demand and the latest output of the solar power generation apparatus 30 is calculated as the planned value of the output of the fuel cell apparatus 40. The latest power demand is, for example, an average of the power demand in last one hour. The latest output of the solar power generation apparatus 30 is, for example, an average of the output of the solar power generation apparatus 30 in last one hour. The averages are, for example, moving averages. The latest power demand may be a minimum value of the power demand in a recent time period (for example, last one hour).

In the present specification, a method for calculating a planned value of the output of the fuel cell apparatus 40 using the prediction models is defined as a first planning method. A method for calculating a planned value of the output of the fuel cell apparatus 40 using only latest data is defined as a second planning method.

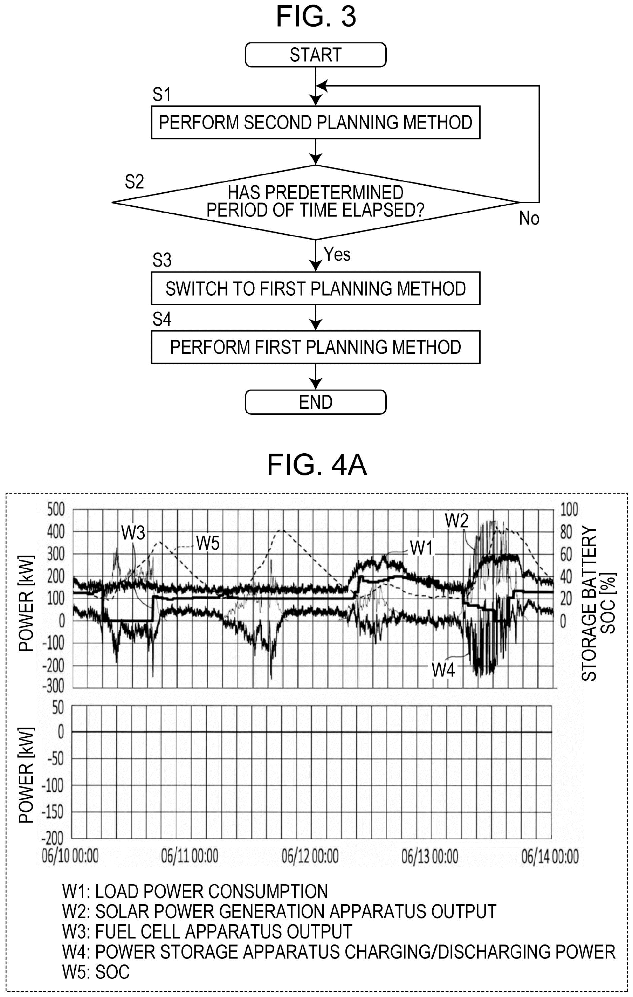

Fig. 3 is a flowchart illustrating a process for switching between the first planning method and the second planning method. Each of processing steps illustrated in Fig. 3 is a processing step performed by the control apparatus 10. In step S1, the second planning method is performed. In step S2, whether a predetermined period of time has elapsed is determined. When the predetermined period of time elapses, in step S3, switching from the second planning method to the first planning method is performed. In step S4, the first planning method is performed. That is, after the second planning method is performed for the predetermined period of time, the switching from the second planning method to the first planning method is performed. The predetermined period of time is, for example, three months to one year.

By performing, before the first planning method, the second planning method in which the output of the fuel cell apparatus 40 is planned in such a way as to compensate for the difference between the actual value Rd of the power demand of the factory and the actual value Rpv of the output of the solar power generation apparatus 30, training data necessary to create the prediction models can be collected. As a result, accuracy of prediction when the first planning method is performed can be increased. After the second planning method is performed for the predetermined period of time, the method for planning the output of the fuel cell apparatus 40 is switched from the second planning method to the first planning method. In the first planning method, the predicted value Pd of the power demand of the factory is predicted on the basis of the actual value Rd of the power demand of the factory. In the first planning method, the predicted value Ppv of the output of the solar power generation apparatus 30 is predicted on the basis of the actual value Rpv of the output of the solar power generation apparatus 30.

According to the flowchart of Fig. 3, the switching from the second planning method to the first planning method is automatically performed after the predetermined period of time elapses. The switching from the second planning method to the first planning method, however, may be performed in accordance with an input by the manager.

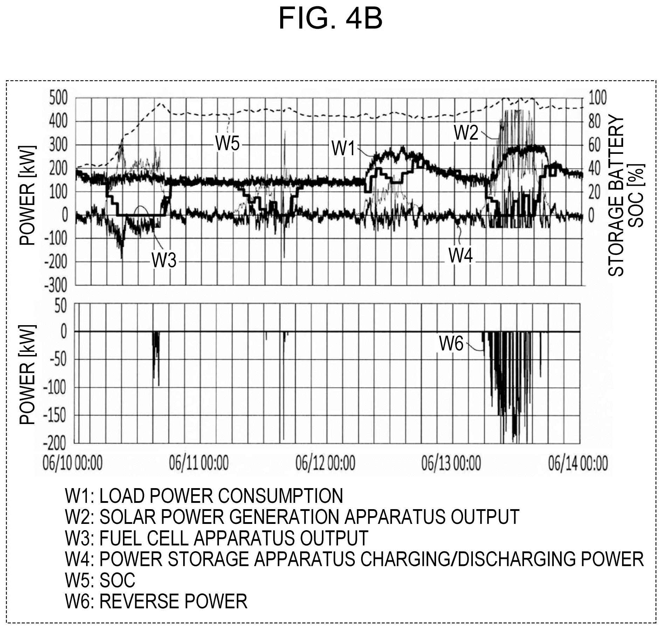

Fig. 4A includes graphs illustrating variations in the various types of power and the SOC in the power system according to the present embodiment at a time when the first planning method is performed. Fig. 4B includes graphs illustrating variations in the various types of power and the SOC in the power system according to the present embodiment at a time when the second planning method is performed. Horizontal axes of the graphs represent elapse of time. A vertical axis of the upper graph on the left represents power (kW). A vertical axis of the upper graph on the right represents the SOC (%). A vertical axis of the lower graph represents purchased power from a commercial power supply or reverse power (kW) to the commercial power supply. Power consumption W1 of the load 300 and the output of the solar power generation apparatus 30 are data obtained from an actual facility. An output W3 of the fuel cell apparatus 40, charging/discharging power W4 of the power storage apparatus 50, an SOC W5, and reverse power W6 are data obtained through a computer simulation.

The power consumption W1 of the load 300 matches between Figs. 4A and 4B. In examples of Figs. 4A and 4B, since an upper limit value is not provided for the output W2 of the solar power generation apparatus 30, the output W2 of the solar power generation apparatus 30 matches between Figs. 4A and 4B.

As illustrated in Fig. 4B, when the output of the fuel cell apparatus 40 was planned on the basis of latest data without performing the prediction based on the prediction models, the output W3 of the fuel cell apparatus 40 greatly varied over time. The SOC W5 of the power storage apparatus 50 was between 80% and 100% in most time periods. In a period (especially from June 13 to June 14) in which the output W2 of the solar power generation apparatus 30 exceeded the power consumption W1, therefore, the charging/discharging power W4 of the power storage apparatus 50 could not be increased. In the example of Fig. 4B, the reverse power W6 was generated.

In contrast, as illustrated in Fig. 4A, when the prediction based on the prediction models was performed, the variation in the output W3 of the fuel cell apparatus 40 over time was small. For example, the output W3 was maintained at about 100 kW from June 11 to June 12. Since the variation in the output of the fuel cell apparatus 40 is small, damage to the stack is suppressed. This leads to extension of the life of the fuel cell apparatus 40. The SOC W5 of the power storage apparatus 50 was maintained between 20% to 80% throughout the entire period. In a period (especially from June 13 to June 14) in which the output W2 of the solar power generation apparatus 30 exceeded the W1, therefore, the charging/discharging power W4 of the power storage apparatus 50 was increased, and the power storage apparatus 50 absorbed excess power. In the example of Fig. 4A, reverse power was not generated.

### (Other Embodiments)

### (Appendix)

The following techniques are disclosed on the basis of the description of the above embodiment.

### (Technique 1)

A control method including performing a first planning method for planning an output of a fuel cell apparatus in such a way as to compensate for a difference between a predicted value of a power demand of a power consumer and a predicted value of an output of a solar power generation apparatus. With this configuration, deterioration of the fuel cell apparatus can be suppressed.

### (Technique 2)

The control method according to technique 1, in which a planned value of the output of the fuel cell apparatus is corrected on a basis of a state of charge of a power storage apparatus predicted from a difference between an actual value of the power demand of the power consumer and a sum of an actual value of the output of the solar power generation apparatus and the planned value of the output of the fuel cell apparatus. With this configuration, a command value for the output of the fuel cell apparatus can be created in consideration of the state of charge of the power storage apparatus, and the power storage apparatus can be maintained in a chargeable/dischargeable state.

### (Technique 3)

The control method according to technique 1 or 2, in which a value smaller than or equal to a difference between a sum of an actual value of the power demand of the power consumer and chargeable power of a power storage apparatus smaller than or equal to maximum charging power of the power storage apparatus and an actual value of the output of the fuel cell apparatus is set to an upper limit value of the output of the solar power generation apparatus. With this configuration, power generated by the solar power generation apparatus can be used without waste.

### (Technique 4)

The control method according to technique 1, in which a power storage apparatus is controlled in such a way as to compensate for a difference between an actual value of the power demand of the power consumer and a sum of an actual value of the output of the solar power generation apparatus and an actual value of the output of the fuel cell apparatus by charging or discharging the power storage apparatus. With this configuration, since supply and demand can be balanced in the power system, it is possible to avoid purchase of power from a commercial power supply and sale of power to the commercial power supply as much as possible.

### (Technique 5)

The control method according to technique 1, in which the predicted value of the power demand of the power consumer is a value obtained by correcting, on a basis of an actual value of the power demand of the power consumer in a latest first period and a predicted value of the power demand of the power consumer in a second period corresponding to the first period, a value predicted on a basis of a correlation between an actual weather condition in an area where the power consumer is located and an actual value of the power demand of the power consumer and a weather forecast in the area where the power consumer is located.

### (Technique 6)

The control method according to technique 5, in which the power consumer includes a factory, and in which the predicted value of the power demand of the power consumer is a value obtained by correcting, on a basis of the actual value of the power demand of the power consumer in the first period and the predicted value of the power demand of the power consumer in the second period, a value predicted on a basis of a correlation between an actual operation in the factory and the actual weather condition and the actual value of the power demand of the power consumer, the weather forecast, and a factory operation plan.

### (Technique 7)

The control method according to technique 1, in which the predicted value of the output of the solar power generation apparatus is a value obtained by correcting, on a basis of an actual value of the output of the solar power generation apparatus in a latest third period and a predicted value of the output of the solar power generation apparatus in a fourth period corresponding to the third period, a value predicted on a basis of a correlation between an actual weather condition in an area where the power consumer is located and an actual value of the output of the solar power generation apparatus and a weather forecast in the area where the power consumer is located.

### (Technique 8)

The control method according to technique 1, further including performing, before the first planning method, a second planning method for planning the output of the fuel cell apparatus in such a way as to compensate for a difference between an actual value of the power demand of the power consumer and an actual value of the output of the solar power generation apparatus, and switching to the first planning method after performing the second planning method for a predetermined period of time, in which the predicted value of the power demand of the power consumer is predicted on a basis of the actual value of the power demand of the power consumer, and in which the predicted value of the output of the solar power generation apparatus is predicted on a basis of the actual value of the output of the solar power generation apparatus. With this configuration, training data necessary to create prediction models can be collected. As a result, accuracy of prediction when the first planning method is performed can be increased.

### (Technique 9)

A control apparatus including a storage storing a predicted value of a power demand of a power consumer and a predicted value of an output of a solar power generation apparatus, and a planner that performs a planning method for planning an output of a fuel cell apparatus in such a way as to compensate for a difference between the predicted value of the power demand of the power consumer and the predicted value of the output of the solar power generation apparatus.

### (Technique 10)

A power system including a solar power generation apparatus, a fuel cell apparatus, and the control apparatus according to technique 9.

### Industrial Applicability

The techniques of the present disclosure are effective for a power system including a solar power generation apparatus and a fuel cell apparatus. The techniques of the present disclosure are especially effective for a power system that is a distributed power supply.

### Reference Signs List

10 control apparatus
12 predictor
14 planner
16 controller
20 database
21 terminal
22 weather information service
30 solar power generation apparatus
31 solar cell module
32 first PCS
33 first power meter
34 first control device
40 fuel cell apparatus
41 fuel cell unit
42 second PCS
43 second power meter
44 second control device
50 power storage apparatus
51 storage battery
52 third PCS
53 third power meter
54 third control device
100 commercial power supply
102 power line
200 power system
300 load
302 fourth power meter

## Claims

1. A control method comprising:
performing a first planning method for planning an output of a fuel cell apparatus in such a way as to compensate for a difference between a predicted value of a power demand of a power consumer and a predicted value of an output of a solar power generation apparatus.

2. The control method according to claim 1,
wherein a planned value of the output of the fuel cell apparatus is corrected on a basis of a state of charge of a power storage apparatus predicted from a difference between an actual value of the power demand of the power consumer and a sum of an actual value of the output of the solar power generation apparatus and the planned value of the output of the fuel cell apparatus.

3. The control method according to claim 1 or 2,
wherein a value smaller than or equal to a difference between a sum of an actual value of the power demand of the power consumer and chargeable power of a power storage apparatus smaller than or equal to maximum charging power of the power storage apparatus and an actual value of the output of the fuel cell apparatus is set to an upper limit value of the output of the solar power generation apparatus.

4. The control method according to claim 1,
wherein a power storage apparatus is controlled in such a way as to compensate for a difference between an actual value of the power demand of the power consumer and a sum of an actual value of the output of the solar power generation apparatus and an actual value of the output of the fuel cell apparatus by charging or discharging the power storage apparatus.

5. The control method according to claim 1,
wherein the predicted value of the power demand of the power consumer is a value obtained by correcting, on a basis of an actual value of the power demand of the power consumer in a latest first period and a predicted value of the power demand of the power consumer in a second period corresponding to the first period, a value predicted on a basis of a correlation between an actual weather condition in an area where the power consumer is located and an actual value of the power demand of the power consumer and a weather forecast in the area where the power consumer is located.

6. The control method according to claim 5,
wherein the power consumer includes a factory, and
wherein the predicted value of the power demand of the power consumer is a value obtained by correcting, on a basis of the actual value of the power demand of the power consumer in the first period and the predicted value of the power demand of the power consumer in the second period, a value predicted on a basis of a correlation between an actual operation in the factory and the actual weather condition and the actual value of the power demand of the power consumer, the weather forecast, and a factory operation plan.

7. The control method according to claim 1,
wherein the predicted value of the output of the solar power generation apparatus is a value obtained by correcting, on a basis of an actual value of the output of the solar power generation apparatus in a latest third period and a predicted value of the output of the solar power generation apparatus in a fourth period corresponding to the third period, a value predicted on a basis of a correlation between an actual weather condition in an area where the power consumer is located and an actual value of the output of the solar power generation apparatus and a weather forecast in the area where the power consumer is located.

8. The control method according to claim 1, further comprising:
performing, before the first planning method, a second planning method for planning the output of the fuel cell apparatus in such a way as to compensate for a difference between an actual value of the power demand of the power consumer and an actual value of the output of the solar power generation apparatus; and
switching to the first planning method after performing the second planning method for a predetermined period of time,
wherein the predicted value of the power demand of the power consumer is predicted on a basis of the actual value of the power demand of the power consumer, and
wherein the predicted value of the output of the solar power generation apparatus is predicted on a basis of the actual value of the output of the solar power generation apparatus.

9. A control apparatus comprising:
a storage storing a predicted value of a power demand of a power consumer and a predicted value of an output of a solar power generation apparatus; and
a planner that performs a planning method for planning an output of a fuel cell apparatus in such a way as to compensate for a difference between the predicted value of the power demand of the power consumer and the predicted value of the output of the solar power generation apparatus.

10. A power system comprising:
a solar power generation apparatus;
a fuel cell apparatus; and
the control apparatus according to claim 9.
